# EUROPÄISCHE PATENTSCHRIFT

(11) **EP 4 511 269 B1**
(45) Veröffentlichungstag und Bekanntmachung des Hinweises auf die Patenterteilung: **14.10.2026**
(21) Anmeldenummer: 23712022.5
(22) Anmeldetag: 20.03.2023
(51) Int. Cl.: B60W 60/00, B60W 40/02, B60W 50/00

(54) **VERFAHREN UND VORRICHTUNG ZUM ABSICHERN EINER AUTOMATISCHEN STEUERUNG EINES KRAFTFAHRZEUGS**
METHOD AND DEVICE FOR SECURING AUTOMATIC CONTROL OF A MOTOR VEHICLE
PROCÉDÉ ET DISPOSITIF DE SÉCURISATION DE LA COMMANDE AUTOMATIQUE D'UN VÉHICULE AUTOMOBILE

(30) Priorität: 21.04.2022 DE 102022109626
(43) Veröffentlichungstag der Anmeldung: 26.02.2025
(73) Patentinhaber: Bayerische Motoren Werke Aktiengesellschaft, 80809 München (DE)
(72) Erfinder: FRAIKIN, Nicolas, 80997 München (DE)
(86) Internationale Anmeldenummer: PCT/EP2023/056996
(87) Internationale Veröffentlichungsnummer: WO 2023/202823

(56) Entgegenhaltungen:
- EP-A2- 3 287 334
- CN-A- 113 734 204
- DE-A1- 102007 030 731
- DE-A1- 102018 214 898
- DE-A1- 102022 003 429
- FR-A1- 3 118 824
- US-A- 5 586 028

## Beschreibung

Die Erfindung betrifft die automatische Steuerung eines Kraftfahrzeugs. Insbesondere betrifft die Erfindung die Bestimmung von Umständen, die für eine automatische Steuerung des Kraftfahrzeugs erforderlich sind.

Ein Kraftfahrzeug kann mittels einer Steuervorrichtung automatisch gesteuert werden. Die Steuerung kann im SAE-Standard J3016 eine Stufe von zwei oder höher erreichen, sodass das Kraftfahrzeug zumindest in bestimmten Fahrmanövern oder Fahrsituationen durch die Steuervorrichtung allein gesteuert werden kann. Solange die Steuervorrichtung nicht in allen denkbaren Situationen unüberwacht arbeiten kann, muss laufend bestimmt werden, ob vorbestimmte Bedingungen, unter denen die Steuerung zuverlässig arbeiten kann, vorliegen oder nicht.

Beispielsweise kann die automatische Steuerung innerhalb eines Tunnels deaktiviert sein, weil dort eine Position des Kraftfahrzeugs auf der Basis eines Empfängers für Signale von Satelliten eines Navigationssystems (GNSS) nicht bestimmt werden kann. Der Tunnel kann in einer geografischen Karte verzeichnet sein, die ein durch das Kraftfahrzeug befahrenes Straßennetz beschreibt. Zur Auswertung, ob sich das Kraftfahrzeug in einem Tunnel befindet, muss seine geografische Position bestimmt und mit den Kartendaten verglichen werden. Allerdings kann die satellitenbasierte Positionsbestimmung auch aus anderen Gründen versagen, sodass mangelnder Bestimmbarkeit der Position per GNSS nicht mit ausreichender Sicherheit bestimmt werden kann, ob sich das Kraftfahrzeug in einem Tunnel befindet oder nicht.

Eine Fahrt in einem Tunnel kann auch auf der Basis einer optischen Abtastung des Umfelds mit einer Kamera bestimmt werden. Die Kamera kann jedoch ebenfalls zur Bestimmung der Position des Kraftfahrzeugs verwendet werden, insbesondere wenn eine autonome Steuerung einer höheren Stufe durchgeführt wird, für die eine redundante Positionsbestimmung erforderlich ist.

Um die Bestimmung des Vorliegens der Bedingungen unabhängig von der Steuerung zu machen, ist ein Sensor zu verwenden, der nicht von der Steuervorrichtung ausgewertet wird. Ein solcher Sensor kann schlecht verfügbar sein, insbesondere wenn die Steuervorrichtung Signale mehrerer an Bord vorhandener Sensoren fusioniert.

Dokument DE 10 2022 003 429 A1 offenbart ein Verfahren zur Bewertung der Anwendbarkeit von autonomen Fahrfunktionen, das die folgenden Schritte umfasst: Sammeln von Daten über

Interventionsreaktionen, die durch den Nutzer und die Umgebung auf die autonomen Fahrfunktionen ausgelöst werden, während der Durchführung der autonomen Fahrfunktionen und Prüfen, auf Grundlage der Interventionsdaten, wie gut die autonomen Fahrfunktionen mit den Gewohnheiten und dem geografischen Gebiet des Nutzers übereinstimmen. Dokument DE 10 2022 003 429 A1 offenbart ferner eine Vorrichtung zur Bewertung der Anwendbarkeit autonomer Fahrfunktionen.

Dokument DE 1 2007 030 731 A1 offenbart ein System und ein Verfahren zur Stützung einer Längsführung eines Fahrzeugs mittels eines Navigations- und Ortungssystems. Dieses Navigations- und Ortungssystem wirkt mit mindestens einer Schallsensoreneinrichtung und einer Schallauswerteeinheit zusammen. Dabei wird eine Schallumgebung des Fahrzeugs erfasst und eine Positionsbestimmung des Fahrzeugs aus digitalisierten Schallumgebungsdaten und Daten mindestens einer digitalisierten Kartenvorlage eines Kartenspeichers des Navigations- und Ortungssystems präzisiert und eine Längsführungseinrichtung des Fahrzeugs unterstützt.

Dokument DE 10 2018 214 898 A1 offenbart eine Sensorvorrichtung zum Detektieren akustischer Signalquellen in der Umgebung eines Fahrzeugs, umfassend: wenigstens einen akustischen Sensor mit einem Schallaufnehmer zum Erfassen von akustischen Signalen einer akustischen Signalquelle in der Umgebung des Fahrzeugs, wobei Schallaufnehmer in einem Hohlraum des Fahrzeugs angeordnet ist, welcher wenigsten einseitig von einer Außenwand des Fahrzeugs begrenzt ist; und eine Steuereinrichtung zum Auswerten der erfassten akustischen Signale, wobei die Steuereinrichtung ausgebildet ist, anhand der erfassten akustischen Signale die wenigstens eine akustische Signalquelle zu identifizieren und ihre Position relativ zum Fahrzeug zu bestimmen.

Eine der Erfindung zu Grunde liegende Aufgabe besteht in der Angabe einer verbesserten Technik zur unabhängigen Bestimmung des Vorliegens vorbestimmter Bedingungen, unter denen das Kraftfahrzeug automatisch gesteuert werden kann. Die Erfindung löst die Aufgabe mittels der Gegenstände der unabhängigen Ansprüche. Unteransprüche geben bevorzugte Ausführungsformen wieder.

Die Erfindung umfasst ein Verfahren zum Absichern einer automatischen Steuerung eines Kraftfahrzeugs mit den Merkmalen von Anspruch 1.

Die automatische Steuerung kann in einer vorbestimmten Fahrsituation deaktiviert werden, in der das Risiko einer falschen Steuerung des Kraftfahrzeugs als groß bekannt ist. Vorteilhaft kann die Bestimmung der Fahrsituation auf der Basis ihrer akustischen Signatur unabhängig von einer Steuerung des Kraftfahrzeugs sein. Die automatische Steuerung kann auf der Basis eines oder mehrere Sensoren an Bord des Kraftfahrzeugs arbeiten, die von Geräuschen im Umfeld des Kraftfahrzeugs nicht berührt sind. Durch die Trennung der Informationsquellen für die Situationsbestimmung von der Positionsbestimmung kann insgesamt eine erhöhte Funktionssicherheit der automatischen Steuerung erreicht werden. Eine Betriebssicherheit des Kraftfahrzeugs kann gesteigert werden.

Es ist besonders bevorzugt, dass die Fahrsituation das Befahren eines Tunnels durch das Kraftfahrzeug umfasst. In einem Tunnel können übliche Sensoren, deren Signal der Steuerung des Kraftfahrzeugs zu Grunde gelegt sein können, nicht verfügbar oder unzuverlässig sein. Beispielsweise kann die Bestimmung einer geografischen Position des Kraftfahrzeugs auf der Basis eines globalen, satellitengestützten Navigationssystems (GNSS) nicht verfügbar sein. Tunnel sind häufig mit Natriumdampflampen ausgeleuchtet, deren gelbes Licht eine optische Erkennung von Landmarken erschweren kann. So kann beispielsweise eine gelbe Fahrspurmarkierung nicht von einer weißen unterschieden werden. Durch die vollständig unabhängige Bestimmung der Tunnelfahrt kann die automatische Steuerung unabhängig von Sensorfehlern rechtzeitig deaktiviert werden.

Unter einem Tunnel wird hierin ein künstlicher, im Wesentlichen röhrenförmiger Hohlraum verstanden, durch den eine Fahrstraße führt, die das Kraftfahrzeug befahren kann. Häufig ist der Tunnel unterirdisch und dient der Unterquerung von Hindernissen wie Bergen, Gewässern oder anderen Verkehrswegen. Zur Errichtung eines solchen Tunnels muss nicht nur das Hindernis ausgehöhlt, sondern der entstandene Hohlraum muss auch gesichert, verschalt oder ausgekleidet werden. Dies erfolgt üblicherweise unter Verwendung von Baumaterialien, die später innerhalb des Tunnels sichtbar sein können. Es kann sich aber auch um einen Lärmschutz-Tunnel, eine Galerie oder ein Bauwerk zur Anbringung von Solarzellen handeln. In solchen Fällen ist der Tunnel nicht immer vollständig geschlossen und kann oben oder seitlich durchlässig oder offen sein.

In einer Variante kann als Tunnel ein Ort angesehen werden, der eine Fahrstraße, auf der das Fahrzeug fährt, derart umspannt, dass ein Empfang von GNSS Signalen zur Positionsbestimmung nicht möglich ist. Optional kann eine solcher Ort erst ab einer vorbestimmten Ausdehnung entlang einer Fahrtrichtung der Fahrstraße als Tunnel angesehen werden.

Das Vorliegen der Fahrsituation kann auf der Basis eines Frequenzspektrums des Geräuschs bestimmt werden. Das Frequenzspektrum kann auf einen vorbestimmten Frequenzbereich beschränkt sein und angeben, welche Frequenz wie stark vertreten ist. Außerdem kann ein zeitlicher Verlauf des Frequenzspektrums zur Bestimmung der Tunnelfahrt betrachtet werden.

Auch eine Lautstärke des Geräuschs kann ausgewertet werden. Je leiser das Geräusch ist, desto weiter weg kann sich das Fahrzeug von seitlichen Wänden eines Tunnels befinden. Fällt die Lautstärke des Geräuschs unter einen vorbestimmten Schwellenwert, so kann die Hypothese eines Tunnels verworfen werden.

Es ist weiter bevorzugt, dass das Vorliegen der Fahrsituation auf der Basis relativer Stärken des Geräuschs in vorbestimmten Frequenzbändern bestimmt wird. Die Stärken in den Frequenzbändern können vorteilhaft mittels einer Fourier-Transformation bestimmt werden. Eine akustische Signatur, die auf eine Tunnelfahrt hinweist, kann so mit guter Sicherheit bestimmt werden.

Das Vorliegen der Fahrsituation kann anhand einer Änderung des Geräuschs bestimmt werden, die auf den Beginn oder das Ende der Fahrsituation hinweist. Beispielsweise kann sich ein Umgebungsgeräusch des Kraftfahrzeugs in charakteristischer Weise ändern, während in einen Tunnel eingefahren oder aus ihm ausgefahren wird. Eine Art oder Geschwindigkeit der Änderung kann in Abhängigkeit einer Fahrgeschwindigkeit des Kraftfahrzeugs betrachtet werden. Korrespondiert die Änderung nicht zur Fahrgeschwindigkeit, so kann es sich um einen anderen akustischen Effekt als einen Tunnel handeln. Die Steuerung kann bei einem erkannten Einfahren in die Fahrsituation deaktiviert und beim Ausfahren wieder freigeschaltet oder reaktiviert werden.

In einer weiter bevorzugten Ausführungsform wird das Vorliegen der Fahrsituation mittels maschinellen Lernens bestimmt. Dazu kann beispielsweise ein künstliches neuronales Netzwerk (KNN) darauf trainiert werden, ein Geräusch zu erkennen, das auf die vorbestimmte Fahrsituation hinweist. Das KNN kann mittels überwachtem Lernen in vorbestimmten Fahrsituationen trainiert werden. Eine Eingangsschicht des KNN kann mit Sensorsignalen eines Mikrofons oder mit vorverarbeiteten Signalen beaufschlagt werden, beispielsweise mit Daten, die das Frequenzspektrum des Geräuschs repräsentieren.

In einer weiteren Ausführungsform wird zusätzlich bestimmt, dass eine geografische Position des Kraftfahrzeugs mittels eines Empfängers für Signale eine satellitengestützten Radionavigationssystems nicht bestimmt werden kann.

Insbesondere wenn die vorbestimmte Fahrsituation eine Tunnelfahrt umfasst, in dem kein Empfang von Satellitensignalen möglich ist, kann dies als zusätzlicher Hinweis ausgewertet werden.

Nach einem weiteren Aspekt umfasst eine Vorrichtung zur Absicherung einer automatischen Steuerung eines Kraftfahrzeugs einen Sensor zur Erfassung eines Geräuschs aus einem Bereich außerhalb des Kraftfahrzeugs; eine Verarbeitungseinrichtung zur Bestimmung, dass das Geräusch auf eine vorbestimmte Fahrsituation hinweist; und eine Schnittstelle zur Bereitstellung eines Signals zum Deaktivieren der automatischen Steuerung.

Die Verarbeitungseinrichtung kann dazu eingerichtet sein, ein hierin beschriebenes Verfahren ganz oder teilweise auszuführen. Dazu kann die Verarbeitungseinrichtung einen programmierbaren Mikrocomputer oder Mikrocontroller umfassen und das Verfahren kann in Form eines Computerprogrammprodukts mit Programmcodemitteln vorliegen. Das Computerprogrammprodukt kann auch auf einem computerlesbaren Datenträger abgespeichert sein. Merkmale oder Vorteile des Verfahrens können auf die Vorrichtung übertragen werden oder umgekehrt.

Gemäß der Erfindung ist der Sensor ein Mikrofon, das zum Erfassen eines Geräuschs im Außenbereich des Kraftfahrzeugs eingerichtet ist, und zwar ein Mikrofon in einem Innenraum des Kraftfahrzeugs. Der Innenraum kann insbesondere eine Fahrgastzelle oder einen Passagierraum bilden. Das Mikrofon ist nämlich auch dazu eingerichtet, Sprache einer Person an Bord des Kraftfahrzeugs abzutasten, beispielsweise im Rahmen einer Freisprechanlage, einer automatischen Stimmerkennung oder einer Sprachsteuerung. So wird vorteilhaft ein bereits bestehendes Mikrofon dazu eingesetzt, eine hierin beschriebene Technik umzusetzen. In einem anderen Beispiel, das nicht unter den Schutzumfang der Erfindung fällt, können Signale mehrerer Sensoren ausgewertet werden, die jeweils dazu eingerichtet sind, Geräusche eines Bereichs außerhalb des Kraftfahrzeugs abzutasten.

Die Erfindung umfasst des weiteren eine Vorrichtung gemäß Anspruch 8 und ein Kraftfahrzeug gemäß Anspruch 9.

Die Erfindung wird nun mit Bezug auf die beigefügten Zeichnungen genauer beschrieben, in denen:
Figur 1 ein Kraftfahrzeug in einer vorbestimmten Fahrsituation; und
Figur 2 ein Ablaufdiagramm eines Verfahrens
illustriert.

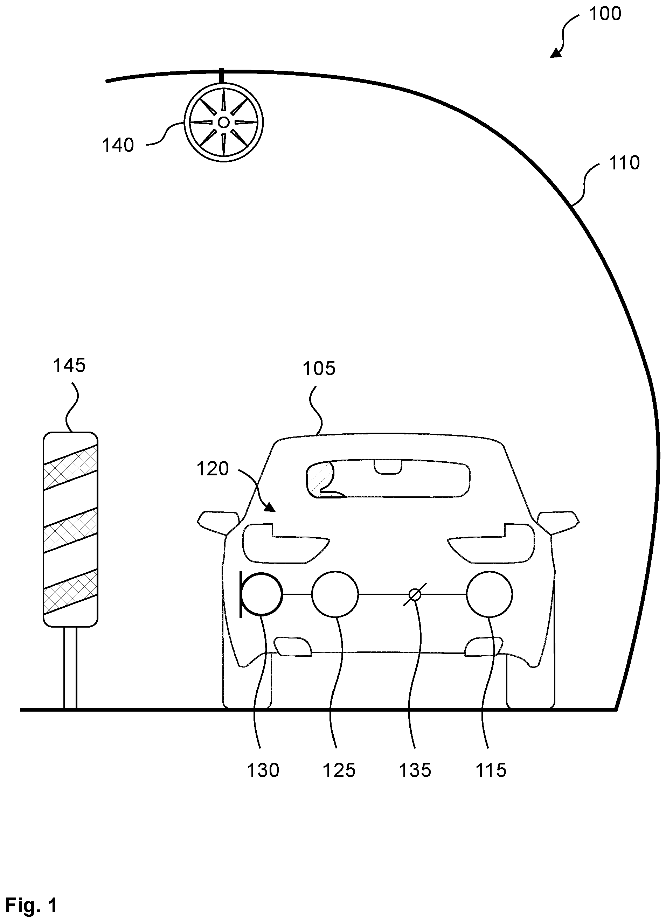

Figur 1 zeigt ein System 100 mit einem Kraftfahrzeug 105 in einer vorbestimmten Fahrsituation. Die Fahrsituation umfasst beispielhaft eine Fahrt durch einen Tunnel 110.

An Bord des Kraftfahrzeugs 105 befindet sich eine Steuervorrichtung 115, die dazu eingerichtet ist, das Kraftfahrzeug 105 in Längsrichtung und/oder in Querrichtung zu steuern. Dabei kann bevorzugt eine Steuerung auf einer der Stufen zwei bis vier durchgeführt werden. Das bedeutet, dass das Kraftfahrzeug 105 durch die Steuervorrichtung 115 nur unter vorbestimmten Bedingungen gesteuert werden kann, die in der vorbestimmten Fahrsituation nicht vorliegen.

Außerdem ist an Bord des Kraftfahrzeugs 105 eine Vorrichtung 120 vorgesehen, die dazu eingerichtet ist, ein Signal zum Deaktivieren der automatischen Steuerung des Kraftfahrzeugs 105 an die Steuervorrichtung 115 bereitzustellen, falls sich das Kraftfahrzeug 105 in der vorbestimmten Fahrsituation befindet. Es ist zu beachten, dass auch mehrere unterschiedliche Fahrsituationen für die Abschaltung der automatischen Steuerung ausgewertet werden können. Die Verarbeitungseinrichtung 125 umfasst bevorzugt eine universelle Rechenmaschine nach Art eines Computers.

Die Verarbeitungseinrichtung 125 kann auch eine Einrichtung repräsentieren, die maschinell lernen kann bzw. ein erlerntes Verhalten ausführt. Eine solche Einrichtung kann insbesondere ein KNN umfassen. Das Mikrofon 130 ist dazu eingerichtet, ein Geräusch zu erfassen, das in einem Bereich außerhalb des Kraftfahrzeugs 105 hörbar ist. Der Sensor 130 kann abweichend von der Erfindung ein Außenmikrofon umfassen, erfindungsgemäß ist er jedoch ein Innenraummikrofon. Die Schnittstelle 135 kann als physische Schnittstelle oder als Softwareschnittstelle ausgebildet sein, falls die Verarbeitungseinrichtung 125 und die Steuervorrichtung 115 miteinander integriert sind.

Fährt das Kraftfahrzeug 105 durch den Tunnel 110, so kann eine Geräuschkulisse, die im Außenbereich des Kraftfahrzeugs 105 wirkt, auf den Tunnel 110 hinweisen. Beispielsweise kann sich im Tunnel 110 eine aktive Geräuschquelle 140 befinden, deren Geräusche auf eine Fahrt durch den Tunnel 110 hinweisen. Eine solche Geräuschquelle 140 kann etwa den dargestellten Lüfter umfassen.

Außerdem kann ein Fahrgeräusch, das durch das sich bewegende Kraftfahrzeug 105 verursacht ist, im Tunnel 110 auf vorbestimmte Weise zum Kraftfahrzeug 105 zurückgeworfen werden, was als passive Geräuschquelle verstanden werden kann. So kann beispielsweise ein Abrollgeräusch eines Reifens oder ein Betriebsgeräusch eines Antriebsmotors des Kraftfahrzeugs 105 an einer Wand des Tunnels 110 oder an einem Objekt 145 reflektiert werden, das im Tunnel 110 anzutreffen ist.

In der dargestellten Ausführungsform umfasst das Objekt 145 eine Bake, in anderen Ausführungsformen kann es beispielsweise einen Pfeiler, eine Strebe, einen Schutzraum oder eine Fluchttür umfassen. Objekte 145 können in vorbestimmten Abständen im Tunnel 110 angeordnet sein, so dass ihre Abfolge beim Passieren einen zusätzlichen Hinweis auf eine Fahrt im Tunnel 110 geben kann.

Es wird vorgeschlagen, dass die Vorrichtung 120 Geräusche aus dem Umfeld des Kraftfahrzeugs 105 mittels des Sensors 130 erfasst und analysiert, um zu bestimmen, ob sich das Kraftfahrzeug 105 in der vorbestimmten Fahrsituation befindet. Die Steuervorrichtung 115 berücksichtigt bevorzugt keine akustischen Signale aus dem Umfeld des Kraftfahrzeugs 105. Die Bestimmung des Vorliegens der vorbestimmten Fahrsituation kann somit vollständig unabhängig von der Steuerung des Kraftfahrzeugs 105 erfolgen. Die Bestimmung, dass sich das Kraftfahrzeug 105 in einem Tunnel 110 befindet, kann noch weiter verbessert werden, indem berücksichtigt wird, dass im Tunnel 110 Radiosignale von Navigationssatelliten üblicherweise nicht empfangbar sind. Eine Fahrt durch den Tunnel 110 kann erst dann bestimmt werden, wenn zusätzlich zu einer passenden akustischen Signatur auch bestimmt wurde, dass keine Satellitensignale empfangbar sind, beziehungsweise eine Position des Kraftfahrzeugs 105 nicht auf der Basis solcher Satellitensignale bestimmt werden kann.

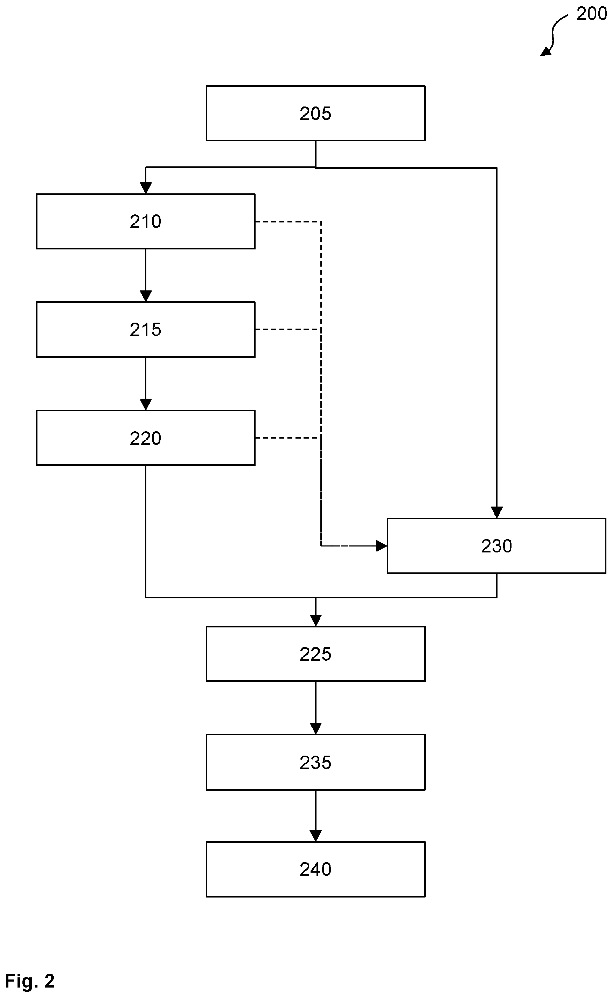

Figur 2 zeigt ein Ablaufdiagramm eines Verfahrens 200 zum Überwachen einer Steuervorrichtung 115 zum Steuern eines Kraftfahrzeugs 105. In einem Schritt 205 kann ein Geräusch aus dem Umfeld des Kraftfahrzeugs 105 erfasst werden. In einem nachfolgenden Schritt 210 kann das erfasste Geräusch in vorbestimmte Frequenzbänder aufgeteilt werden. Die Frequenzbänder liegen bevorzugt in einem für das menschliche Ohr hörbaren Bereich und können gleichmäßig oder ungleichmäßig verteilt sein. In einem Schritt 215 können relative Stärken des Geräuschs in den unterschiedlichen Frequenzbändern bestimmt werden. Die Schritte 210 und 215 können das Durchführen einer Fourier-Transformation umfassen.

Optional kann in einem Schritt 220 ein zeitlicher Verlauf des Geräuschs beziehungsweise der festgestellten Charakteristika bestimmt werden. Dazu wird weiter bevorzugt eine Veränderung des Geräuschs über eine Dauer, beispielsweise circa fünf Sekunden, weiter bevorzugt circa zwei Sekunden, betrachtet.

In einem Schritt 225 kann dann bestimmt werden, ob eine vorbestimmte Fahrsituation auf der Basis des erfassten Geräuschs bestimmt werden kann. Dazu können die bestimmten Charakteristika mit vorbestimmten Schwellenwerten oder vorbestimmten Mustern verglichen werden. In einer weiteren Ausführungsform kann das Geräusch auch mittels Methoden des maschinellen Lernens daraufhin untersucht werden, ob es auf einer Fahrt des Kraftfahrzeugs 105 in einer vorbestimmten Fahrsituation hinweist.

Dazu kann in einem Schritt 230 das Geräusch beispielsweise mittels eines KNN erkannt werden. Der Erkennung kann das ursprüngliche Geräusch aus der Abtastung aus dem Schritt 205 oder eine teilverarbeitete Version aus einem der Schritte 210 bis 220 zu Grunde gelegt werden. In einer ersten Ausführungsform kann erkannt werden, ob sich das Kraftfahrzeug 105 in der vorbestimmten Fahrsituation befindet oder nicht. In einer anderen Ausführungsform können eines oder mehrere charakteristische Geräusche bestimmt werden, die auf eine Fahrt in der vorbestimmten Fahrsituation hinweisen. Die geräuschbasierte Erkennung der vorbestimmten Fahrsituation im Schritt 225 kann sowohl Ergebnisse der Schritte 210 bis 220 als auch der Geräuscherkennung mittels Maschinenlernens im Schritt 230 berücksichtigen.

In einer besonders bevorzugten Ausführungsform, in der die vorbestimmte Fahrsituation einer Fahrt durch einen Tunnel 110 umfasst, kann in einem Schritt 235 überprüft werden, ob Signale eines GNSS verfügbar sind. Ist dies nicht der Fall, so kann dies als Indiz auf eine Fahrt im Tunnel 110 gewertet werden. Es ist zu beachten, dass das fehlende Signal als notwendiges, aber nicht als hinreichendes Merkmal für die Bestimmung der Fahrt durch den Tunnel 110 ausgewertet werden kann.

Im Schritt 240 kann ein Signal zum Deaktivieren der Steuerung des Kraftfahrzeugs 105 bereitgestellt werden, falls bestimmt wurde, dass die vorbestimmte Fahrsituation vorliegt. Sollte hingegen bestimmt werden, dass die vorbestimmte Fahrsituation nicht vorliegt, so kann die automatische Steuerung des Kraftfahrzeugs freigegeben werden. Optional kann die Steuerung reaktiviert werden, wenn sie zuvor deaktiviert worden ist.

### Bezugszeichen

- 100: System
- 105: Kraftfahrzeug
- 110: Tunnel
- 115: Steuervorrichtung
- 120: Vorrichtung
- 125: Verarbeitungseinrichtung
- 130: Sensor
- 135: Schnittstelle
- 140: aktive Geräuschquelle
- 145: Objekt

- 200: Verfahren
- 205: Geräusch erfassen
- 210: in Frequenzbänder aufteilen
- 215: relative Stärken bestimmen
- 220: zeitlichen Verlauf bestimmen
- 225: vorbestimmte Fahrsituation liegt vor?
- 230: Geräusch erkennen
- 235: GNSS Signal verfügbar?
- 240: Steuerung deaktivieren

## Patentansprüche

1. Verfahren (200) zum Absichern einer automatischen Steuerung (115) eines Kraftfahrzeugs (105), wobei das Verfahren (200) folgende Schritte umfasst:
Erfassen (205) eines Geräuschs aus einem Bereich außerhalb des Kraftfahrzeugs (105) mittels eines Sensors (130) einer Vorrichtung (120) des Kraftfahrzeugs (105), wobei der Sensor (130) ein Mikrofon in einem Innenraum des Kraftfahrzeugs (105) ist, das eingerichtet ist, Sprache einer Person im Innenraum des Kraftfahrzeugs (105) abzutasten und das Geräusch zu erfassen, das in dem Bereich außerhalb des Kraftfahrzeugs (105) hörbar ist;
Bestimmen (225), dass das Geräusch auf eine vorbestimmte Fahrsituation hinweist; und
Bereitstellen (240) eines Signals zum Deaktivieren der automatischen Steuerung (115).

2. Verfahren (200) nach Anspruch 1, wobei die Fahrsituation das Befahren eines Tunnels (105) durch das Kraftfahrzeug (105) umfasst.

3. Verfahren (200) nach Anspruch 1 oder 2, wobei das Vorliegen der Fahrsituation auf der Basis eines Frequenzspektrums des Geräuschs bestimmt (210) wird.

4. Verfahren (200) nach Anspruch 3, wobei das Vorliegen der Fahrsituation auf der Basis relativer Stärken des Geräuschs in vorbestimmten Frequenzbändern (210) bestimmt wird.

5. Verfahren (200) nach einem der vorangehenden Ansprüche, wobei das Vorliegen der Fahrsituation anhand einer Änderung (220) des Geräuschs bestimmt wird, die auf den Beginn oder das Ende der Fahrsituation hinweist.

6. Verfahren (200) nach einem der vorangehenden Ansprüche, wobei das Vorliegen der Fahrsituation mittels maschinellen Lernens bestimmt (230) wird.

7. Verfahren (200) nach einem der vorangehenden Ansprüche, wobei zusätzlich bestimmt (235) wird, dass eine geografische Position des Kraftfahrzeugs (105) mittels eines Empfängers für Signale eines satellitengestützten Radionavigationssystems nicht bestimmt werden kann.

8. Vorrichtung (120) zur Absicherung einer automatischen Steuerung (115) eines Kraftfahrzeugs (105), wobei die Vorrichtung (120) folgendes umfasst:
einen Sensor (130) zur Erfassung eines Geräuschs aus einem Bereich außerhalb des Kraftfahrzeugs (105);
eine Verarbeitungseinrichtung (125) zur Bestimmung, dass das Geräusch auf eine vorbestimmte Fahrsituation hinweist; und
eine Schnittstelle (135) zur Bereitstellung eines Signals zum Deaktivieren der automatischen Steuerung (115),
wobei der Sensor (130) ein Mikrofon in einem Innenraum des Kraftfahrzeugs (105) ist, das eingerichtet ist, Sprache einer Person im Innenraum des Kraftfahrzeugs (105) abzutasten und das Geräusch zu erfassen, das in dem Bereich außerhalb des Kraftfahrzeugs (105) hörbar ist.

9. Kraftfahrzeug (105), umfassend eine automatische Steuervorrichtung (115) und eine Vorrichtung (120) nach Anspruch 8.

## Claims

1. Method (200) for safeguarding an automatic control (115) of a motor vehicle (105), wherein the method (200) comprises the following steps:
- detecting (205) a noise from an area outside the motor vehicle (105) by means of a sensor (130) of a device (120) of the motor vehicle (105), wherein the sensor (130) is a microphone in an interior of the motor vehicle (105) which is configured to sample speech of a person in the interior of the motor vehicle (105) and to detect the noise which is audible in the area outside the motor vehicle (105);
- determining (225) that the noise indicates a predetermined driving situation; and providing (240) a signal for deactivating the automatic control (115).

2. Method (200) according to claim 1, wherein the driving situation comprises the motor vehicle (105) driving through a tunnel (105).

3. Method (200) according to claim 1 or 2, wherein the presence of the driving situation is determined (210) on the basis of a frequency spectrum of the noise.

4. Method (200) according to claim 3, wherein the presence of the driving situation is determined (210) on the basis of relative strengths of the noise in predetermined frequency bands.

5. Method (200) according to any one of the preceding claims, wherein the presence of the driving situation is determined on the basis of a change (220) of the noise which indicates the beginning or the end of the driving situation.

6. Method (200) according to any one of the preceding claims, wherein the presence of the driving situation is determined (230) by means of machine learning.

7. Method (200) according to any one of the preceding claims, wherein it is additionally determined (235) that a geographical position of the motor vehicle (105) cannot be determined by means of a receiver for signals of a satellite-based radio navigation system.

8. Device (120) for safeguarding an automatic control (115) of a motor vehicle (105), wherein the device (120) comprises:
- a sensor (130) for detecting a noise from an area outside the motor vehicle (105);
- a processing device (125) for determining that the noise indicates a predetermined driving situation; and
- an interface (135) for providing a signal for deactivating the automatic control (115),
- wherein the sensor (130) is a microphone in an interior of the motor vehicle (105) which is configured to sample speech of a person in the interior of the motor vehicle (105) and to detect the noise which is audible in the area outside the motor vehicle (105).

9. Motor vehicle (105), comprising an automatic control device (115) and a device (120) according to claim 8.

## Revendications

1. Procédé (200) pour sécuriser une commande automatique (115) d'un véhicule automobile (105), le procédé (200) comprenant les étapes suivantes:
- détecter (205) un bruit provenant d'une zone à l'extérieur du véhicule automobile (105) au moyen d'un capteur (130) d'un dispositif (120) du véhicule automobile (105), le capteur (130) étant un microphone dans un espace intérieur du véhicule automobile (105) qui est conçu pour échantillonner la parole d'une personne dans l'espace intérieur du véhicule automobile (105) et pour détecter le bruit qui est audible dans la zone à l'extérieur du véhicule automobile (105);
- déterminer (225) que le bruit indique une situation de conduite prédéterminée; et
- fournir (240) un signal pour désactiver la commande automatique (115).

2. Procédé (200) selon la revendication 1, la situation de conduite comprenant la circulation du véhicule automobile (105) dans un tunnel (105).

3. Procédé (200) selon la revendication 1 ou 2, la présence de la situation de conduite étant déterminée (210) sur la base d'un spectre de fréquences du bruit.

4. Procédé (200) selon la revendication 3, la présence de la situation de conduite étant déterminée (210) sur la base d'intensités relatives du bruit dans des bandes de fréquences prédéterminées.

5. Procédé (200) selon l'une quelconque des revendications précédentes, la présence de la situation de conduite étant déterminée sur la base d'un changement (220) du bruit qui indique le début ou la fin de la situation de conduite.

6. Procédé (200) selon l'une quelconque des revendications précédentes, la présence de la situation de conduite étant déterminée (230) au moyen d'apprentissage automatique.

7. Procédé (200) selon l'une quelconque des revendications précédentes, il étant en outre déterminé (235) qu'une position géographique du véhicule automobile (105) ne peut pas être déterminée au moyen d'un récepteur pour signaux d'un système de radionavigation par satellite.

8. Dispositif (120) pour sécuriser une commande automatique (115) d'un véhicule automobile (105), le dispositif (120) comprenant:
- un capteur (130) pour détecter un bruit provenant d'une zone à l'extérieur du véhicule automobile (105);
- un dispositif de traitement (125) pour déterminer que le bruit indique une situation de conduite prédéterminée; et
- une interface (135) pour fournir un signal pour désactiver la commande automatique (115),
- le capteur (130) étant un microphone dans un espace intérieur du véhicule automobile (105) qui est conçu pour échantillonner la parole d'une personne dans l'espace intérieur du véhicule automobile (105) et pour détecter le bruit qui est audible dans la zone à l'extérieur du véhicule automobile (105).

9. Véhicule automobile (105), comprenant un dispositif de commande automatique (115) et un dispositif (120) selon la revendication 8.
